# EUROPEAN PATENT APPLICATION

(11) **EP 4 420 756 A1**
(43) Date of publication of application: **28.08.2024**
(21) Application number: 23158848.4
(22) Date of filing: 27.02.2023
(51) Int. Cl.: B01D 53/04

(54) **ARRANGEMENT FOR REMOVING CO2 FROM AIR, METHOD OF MAKING SAME, AND METHOD FOR REMOVING CO2 FROM AIR**

(71) Applicant: Airbus Operations GmbH, 21129 Hamburg (DE); Airbus S.A.S., 31700 Blangnac (FR)
(72) Inventor: Bulmann, Antje, 21129 Hamburg (DE); Matthias, Carsten, 21129 Hamburg (DE); Schleifenbaum, Christiane, 21129 Hamburg (DE); Ketscher, Leon, 21129 Hamburg (DE); Horn, Tobias, 21129 Hamburg (DE); Fetter, Viktor, 21129 Hamburg (DE)
(74) Representative: KASTEL Patentanwälte PartG mbB

(57) **Abstract**

An arrangement (10) for removing CO2 from air comprises an air permeable, electrically conductive mesh (11) coated with an adsorption material (12), in particular amine, which is configured for adsorbing CO2 from an air flow (13) through the mesh (11), and electric contact elements (14, 15) connected to a power supply (16) and contacting the electrically conductive mesh (11) to provide an electric current through the mesh (11) for electric resistance heating of the mesh (11) to remove the adsorbed CO2 from adsorption material (12). In a method, an air flow 13 is directed through the mesh (11) for adsorbing CO2, and the mesh (11) is heated by resistance heating, preferably but not exclusively, in a negative pressure environment for a desorption process to remove the CO2 from the adsorption material.

## Description

The invention relates to an arrangement for removing CO2 (carbon dioxide) from air. Further, the invention relates to a method of making an arrangement for removing CO2 from air. In addition, the invention relates to a method for removing CO2 from air.

The invention is in particular applicable to life support systems and direct air capture systems. The technology can for example be implemented in space applications, space stations and spacecrafts, like e.g. the ISS (International Space Station). It can also be applied in submarine applications, in terrestrial applications and in other habitats. Generally, the invention can be applied in systems and environments in which there is a need to filter CO2 from ambient air, to separate it, and/or to purifying it.

It is known to use adsorbent materials, like e.g. carbon-based adsorbents, zeolites and metal oxides, for CO2 capture in a temperature and/or pressure swing adsorption process. To release the captured CO2 molecules, the adsorber material needs to be heated up and/or put in an environment of negative pressure. The heat is supplied to the adsorber via steam, hot air or heated surfaces, e.g. within heat exchanger. Because of the high energy demand for water evaporation or inefficient heat transfer and the high thermal mass of the known systems, a high amount of energy gets lost in the process and it becomes thermodynamically inefficient. Furthermore, for desorption with steam, the output gas needs to be dried for further processing, which consumes additional energy.

It is the object of the invention to increase the energy efficiency when capturing CO2 from air.

According to a first aspect, the invention provides an arrangement for removing CO2 from air, comprising an air permeable, electrically conductive mesh coated with an adsorption material which is configured for adsorbing CO2 from an air flow through the mesh, and electric contact elements connected to a power supply and contacting the electrically conductive mesh to provide an electric current through the mesh for electric resistance heating of the mesh to remove the adsorbed CO2 from adsorption material.

Preferably, the adsorption material comprises amine.

Amines are understood as derivatives of ammonia (NH₃), wherein one or more hydrogen atoms have been replaced by a substituent such as an alkyl or aryl group.

Preferably, the adsorption material provides a rough and/or porous surface for increasing the surface area coated by the adsorption material adsorbing the CO2.

Preferably, the mesh comprises a plurality of fibres coated with the adsorption material. The fibres coated with the adsorption material are also referred to as CO2 adsorbers.

In particular, the fibres may comprise a core which is coated with the adsorption material.

Preferably, the core is made of an electrically conductive material. The core is e.g. made of a metal or carbon fibers.

In particular, the core may comprise a surrounding polymer layer or coating.

The core may also be made of or comprise a polymer which is coated or surrounded by an electrically conductive layer.

Preferably, the core provides a rough and/or porous surface for carrying the adsorption material.

Preferably, the arrangement comprises an air flow generating unit configured to generate an air flow through the mesh.

Preferably, the arrangement comprises a valve unit configured for switching between a CO2 adsorption mode, in which the CO2 reduced air escaping from the mesh is directed or returned to the environment, and a desorption mode, in which the CO2 enriched air escaping from the mesh is directed outside that environment.

Preferably, the CO2 enriched air is directed towards a location or environment where it is needed.

In particular, the arrangement may form a Direct Air Capture System (DAC system).

According to a second aspect, the invention provide a method of making an arrangement for removing CO2 from air, comprising the steps: producing an air permeable, electrically conductive mesh which is coated with an adsorption material configured for adsorbing CO2 from an air flow directed through the mesh; providing electric contact elements configured to be connected to a power supply; and electrically connecting the electrically conductive mesh to the electric contact elements for electric resistance heating of the mesh.

Preferably, the mesh is produced by coating fibre cores with the adsorption material.

Preferably, the cores are made of an electrically conductive material.

Preferably, the cores are made of an electrically conductive material, wherein a polymer coating is applied to the cores before coating the cores with the adsorption material.

Preferably, the cores are made of a polymer, wherein an electrically conductive coating is applied to the cores before coating the cores with the adsorption material.

Preferably, the cores are provided with a roughened and/or porous surface before coating the cores with the adsorption material.

According to a third aspect, the invention provides a method for removing CO2 from air, comprising the steps: directing an air flow through an air permeable, electrically conductive mesh coated with an adsorption material for adsorbing CO2 from the air; and removing the adsorbed CO2 from the adsorption material by generating an electric current through the mesh which heats the coated mesh due to the electric resistance of the mesh.

Preferably, the adsorption material comprises amine.

Preferably, the air escaping from the mesh is returned to the environment when the CO2 is adsorbed by the adsorption material, whereas the air escaping from the mesh is led out of the environment and in the desired location, where it is needed, when the CO2 is removed from the adsorption material.

Preferably, the mesh is heated by resistance heating possibly in a negative pressure environment.

Preferably, the arrangement according to the invention is used in the method of removing CO2 from air.

Preferably, the invention can be used both ways: to reduce CO2 in the air of an environment or increase the CO2 level in the air of the environment when desired (e.g. greenhouses). In second case the "side benefit" is cleaner air in the ambient around the environment.

By the invention, the heating process becomes more energy efficient as the heat is directly produced in the adsorber material and the thermal mass is drastically reduced, which results in a reduced and low heat loss. The invention allows a quick heating without having large thermal losses.

Furthermore, the desorptions process efficiency is increased under negative pressure and heat transfer not dependent on heat conduction through air.

The air flow impact is very small as the mesh provides a high surface area and a low pressure drop. Thus, the pressure resistance for the air stream is reduced, and less energy is needed to push the air through the system. A large surface area, which is advantageously completely functionalised with CO2 adsorbing properties, ensures a high CO2 binding capacity for capturing CO2 from the air stream

The adsorber core is e.g. formed by a material made of or comprising an electrical conducting material such as metal or carbon fibers to allow resistive electrical heating. The adsorber core can also be made of or comprising a polymer which is surrounded by an electrically conductive material provided for resistive electrical heating.

The invention provides a reduced energy consumption for desorption by more efficient processes and fewer losses. By shorter cycle times due to faster heating, the output is increased, while the reduced energy consumption increases the overall efficiency and hence lowers the costs per kg CO2.

The invention provides a material with all the mentioned advantages. In particular, it provides an energy efficient adsorption with a low pressure drop, a high CO2 capacity, and an energy efficient desorption with low heat losses. The factor defining the energy efficiency of the adsorption is in particular the pressure drop of the air flow passing through the material during the process. The CO2 capacity of the adsorber material is directly proportional to the functionalised CO2 capturing surface area. The energy efficiency of the desorption process is determined by two factors, namely the heating efficiency and minimization of heat losses.

Characteristics and advantages described in relation to the arrangement for removing CO2 from air are also related to the device and the method for removing CO2 from air, and vice versa.

In the following, exemplary embodiments of the invention showing further characteristics and advantages are described in detail with reference to the figures, in which:
- **Fig. 1**: shows an arrangement for removing CO2 from air according to a preferred embodiment of the invention, as a schematic sectional view;
- **Fig. 2**: shows an CO2 capture device according to a preferred embodiment of the invention comprising the arrangement shown in Fig. 1, as a schematic sectional view;
- **Fig. 3**: shows a sectional view of a fibre used in the arrangement for removing CO2 from air according to a first particularly preferred embodiment of the invention;
- **Fig. 4**: shows a sectional view of a fibre used in the arrangement for removing CO2 from air according to a second particularly preferred embodiment of the invention;
- **Fig. 5**: shows a sectional view of a fibre used in the arrangement for removing CO2 from air according to a third particularly preferred embodiment of the invention; and
- **Fig. 6**: shows a sectional view of a fibre used in the arrangement for removing CO2 from air according to a fourth particularly preferred embodiment of the invention.

In the figures, similar or identical elements and features are designated by the same reference numbers. The features, functions and advantages discussed herein and shown in the embodiments can be achieved independently and can be combined in other embodiments. The method steps can be performed in a different order.

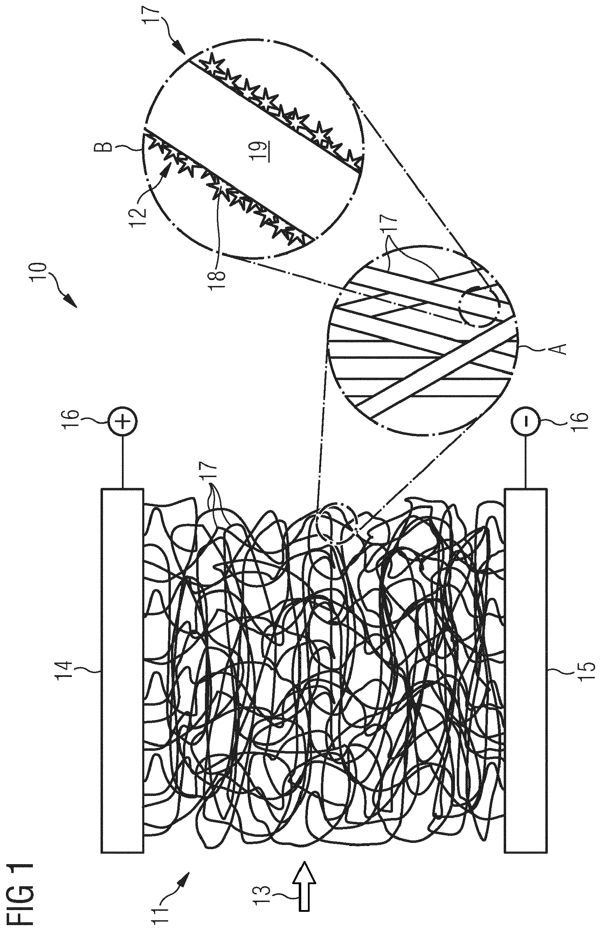

**Fig. 1** shows an arrangement 10 for removing CO2 from air according to a preferred embodiment of the invention. The arrangement 10 comprises an air permeable, electrically conductive mesh 11 which is coated with an adsorption material 12, as shown in an enlarged sections A and B of Fig. 1.

The adsorption material 12 is configured for absorbing CO2 (carbon dioxide) from an airflow 13 through the mesh 11. Further, the CO2 capture arrangement 10 comprises electric contact elements 14, 15 which are connected to a power supply 16 and contacting the electrically conductive mesh 11 in order to provide an electric current through the mesh 11 for electric resistance heating of the mesh 11. By heating the mesh 11, the adsorbed CO2 can be removed from the adsorption material 12.

The mesh 11 comprises a plurality of small fibres 17 which create a large surface for the CO2 molecules to be captured by the adsorption material 12, as shown in enlarged section A of Fig. 1.

The mesh 11 is highly air permeable and provides the lowest pressure drop possible of the airflow 13 through the mesh 11 for the given surface of the adsorption material 12.

Here, the property to capture carbon dioxide from the air 13 is realised by a coating 18 which is preferably made of or comprising amine. Amines are organic links with a functional an H2 group, e.g. (3-aminopropyl) triethoxisilane (APTES), which is reactive with other organic molecules. The adsorbent or absorption material 12 provided by coating 18 is able to bind CO2 and store it (adsorption) until heat is applied to break the binding again (desorption). The coating or amine coating 18 is applied on the whole surface of the mesh 11, and thus it provides the largest functionalised area leading to a maximum CO2 binding capacity and hence output.

Furthermore, the amine coating 18 of the fibres 17 is formed as a rough porous layer so that the functionalised area and the CO2 binding capacity is increased to a maximum. The spikes are not a physical shape, they were used to depict the amine coating

To ensure an efficient desorption based on a temperature swing process, the mesh 11 is preferably either directly made of an electrically conductive material such as e.g. stainless steel or graphite, or it may preferably consist of a polymer core coated with an electrically conductive layer. Preferably, the electrically conductive materials are configured or selected to have the highest possible electrical resistance. The mesh 11 is electrically contacted by the contacting elements 14, 15 and works in the same way as a resistive heater.

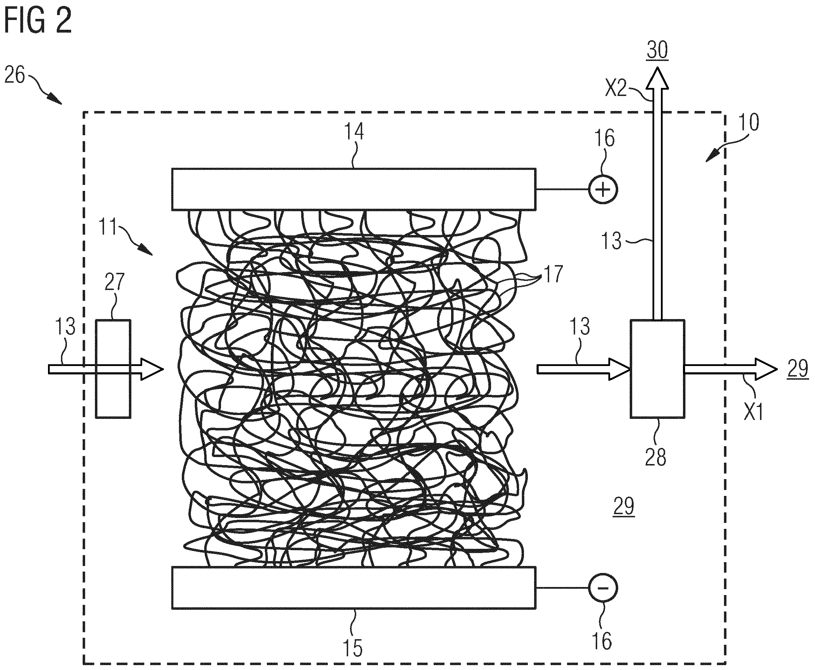

As depicted in **Fig. 2****,** the arrangement 10 may be configured as a CO2 capture device 26. The device 26 is configured for direct air capture and thus it is also referred to as a direct air capture system (DAC system). The DAC system 26 comprises the arrangement 10 for removing CO2 from air according as described above.

The DAC system 26 comprises an air flow generation unit 27 configured as a fan for generating the airflow 13 through mesh 11. The DAC system 26 further comprises a valve unit 28 configured for switching between a CO2 adsorption mode, in which the air flow 13 escaping from the mesh 11 is directed to the environment or habitat 29 where CO2 reduced air is needed, as indicated by arrow X1, and at desorption mode, in which the air escaping from the mesh 11 is directed outside that environment 29 towards environment 30, where it is needed, as indicated by arrow X2.

The DAC system 26 has a significantly decreased energy consumption and furthermore, less components are needed to build e.g. a direct air capture module.

When air flows through the mesh 11, CO2 binds with the particles of the adsorption material 12, in particular with the amine particles, and due to the large fully functionalised surface, the amount of captured carbon dioxide is increased compared to already existing systems.

Additionally, the heating process is much simpler because the metal core, which is highly electrically resistant, gets connected to power supply 16 and directly heats the surface provided of the amine coating or another CO2 adsorption material.

This ensures heating directly the area where the heat is needed without relying on heat conduction. Furthermore, the loss of heat to the ambient air is reduced to a minimum. In addition, the DAC system offers the possibility to easily regulate the heat as needed with high precision.

When switching between the adsorption mode and the desorption mode, not much heat is lost due to the small thermal mass of the system.

In the above examples, amine is used as CO2 adsorption material.

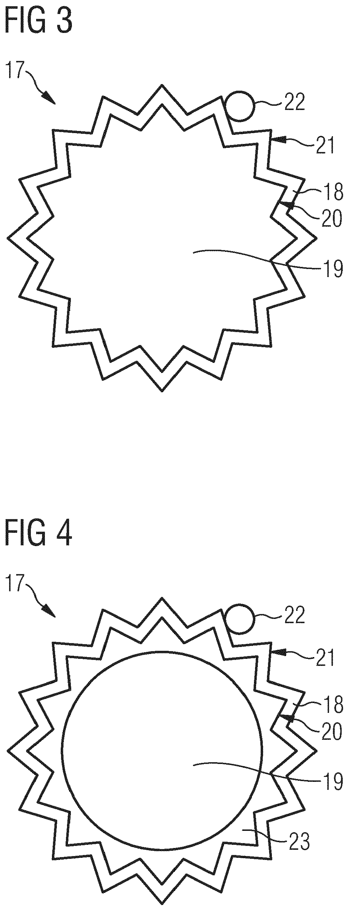

**Figures 3 to 6** show different preferred variants of the functionalisation of the fibres 17 of mesh 11.

**Fig. 3** shows a first variant of the fibre functionalisation. The fibres 17 of mesh 11, which is configured as a metal mesh, get roughened and/or are made porous. This is preferably achieved by a chemical reaction or by applying mechanical forces before the coating 18 or amine coating is applied.

The fibres 17 comprise a metal core 19 having a roughened or porous surface 20 on which the coating 18 or amine coating gets applied. As a result, the coating layer 18 provides a structured outer surface 21 which is similar to the surface 20 of the rough metal core 19 on which the coating 18 is applied. That means, the fibres 17 of mesh 11 comprise a rough metal core 19 coated with the adsorption material 12 forming the coating layer 18 of the fibres 17. The fibres 17 of mesh 11 have a structured outer surface 21 configured to adsorb CO2 molecules 22.

**Fig. 4** shows a second variant of the fibre functionalisation. Here, the metal core 19 of the fibres 17 gets coated with a polymer 23 having a surface 20 which is rough and/or porous or which can be roughened or made porous. Thereafter, the CO2 adsorbent or amine coating 18 is applied as a second layer on top of the polymer surface 20. As a result, the outer surface 21 of fibre 17 is structured similarly to the underlying surface 24 and thus the fibres 17 of mesh 11 provide an enlarged surface 21 to capture CO2 molecules 22.

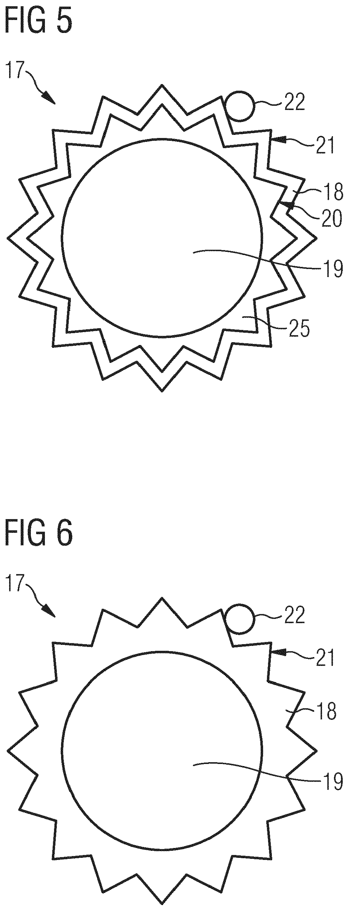

**Fig. 5** shows a third variant of the fibre functionalisation. Here, the core 19 of fibre 17 is made of a polymer and gets coated with a rough and/or porous metal layer 25 first in order to allow resistance heating. Thereafter, it is coated with the adsorption material 12, preferably amine. Due to the rough porous surface 20 of the underlying metal coating 25, the amine coating 18 provides a structured outer surface 21 for capturing the CO2 molecules 22.

**Fig. 6** shows of fourth variant of the fibre functionalisation. Here, the inner core 19 is a metal core and gets coated with the CO2 adsorbent material, preferably amine, that already provides a rough and or porous surface. In this way, the fibres 17 comprising a metal core 19 and an amine coating layer 18 which provides the rough or porous outer surface 21 of fibres 17 for capturing the CO2 molecules 22.

### List of reference numbers:

- 10: arrangement for removing CO2 from air
- 11: mesh
- 12: adsorption material / adsorbent
- 13: airflow
- 14, 15: electric contact elements
- 16: power supply
- 17: fibres
- 18: coating or amine coating
- 19: core
- 20: surface of core
- 21: surface of coating / outer surface
- 22: CO2 molecules
- 23: polymer
- 25: metal coating
- 26: device for removing CO2 from air / direct air capture system
- 27: air flow generating unit
- 28: valve unit
- 29: environment / habitat
- 30: environment
- X1: air flow to habitat
- X2: air flow out of habitat

## Claims

1. Arrangement for removing CO2 from air, comprising
an air permeable, electrically conductive mesh (11) coated with an adsorption material (12) which is configured for adsorbing CO2 from an air flow (13) through the mesh (11), and
electric contact elements (14, 15) connected to a power supply (16) and contacting the electrically conductive mesh (11) to provide an electric current through the mesh (11) for electric resistance heating of the mesh (11) to remove the adsorbed CO2 from adsorption material (12).

2. Arrangement according to claim 1, **characterized in that** the adsorption material (12) comprises amine.

3. Arrangement according to claim 1 or 2, **characterized in that** the adsorption material (12) provides a rough and/or porous surface (21) for adsorbing the CO2.

4. Arrangement according to one of the preceding claims, **characterized in that** the mesh (11) comprises a plurality of fibres comprising a core (19) which is coated with the adsorption material (12), wherein the core (19)
4.1. is made of an electrically conductive material; and/or
4.2. is made of an electrically conductive material and comprising a polymer coating (23); and/or
4.3. is made of a polymer coated with an electrically conductive layer (25);
4.4. provides a rough and/or porous surface (20) for carrying the adsorption material (12).

5. Arrangement according to one of the preceding claims, **characterized by** an air flow generating unit (27) configured to generate an air flow (13) through the mesh (11).

6. Arrangement according to one of the preceding claims, **characterized by** a valve unit (28) configured for switching between a CO2 adsorption mode, in which the air escaping from the mesh (11) is directed to the environment (29) where CO2 reduction is needed, and a desorption mode, in which the air escaping from the mesh (11) is directed outside that environment (29) towards another environment (30), where CO2 is needed.

7. Method of making an arrangement for removing CO2 from air, comprising the steps:
producing an air permeable, electrically conductive mesh (11) which is coated with an adsorption material (12) configured for adsorbing CO2 from an air flow (13) directed through the mesh (11),
providing electric contact elements (14, 15) configured to be connected to a power supply (16), and
electrically connecting the electrically conductive mesh (11) to the electric contact elements (14, 15) for electric resistance heating of the mesh (11).

8. Method according to claim 7, **characterized in that** the mesh (11) is produced by coating fibre cores (19) with the adsorption material (12), wherein the cores (19)
8.1. are made of an electrically conductive material; and/or
8.2. are made of an electrically conductive material, wherein a polymer coating (23) is applied to the cores (19) before coating the cores (19) with the adsorption material (12); and/or
8.3. are made of a polymer, wherein an electrically conductive coating (25) is applied to the cores (19) before coating the cores (19) with the adsorption material (12); and/or
8.4. are provided with a roughened and/or porous surface (20) before coating the cores (19) with the adsorption material (12).

9. Method for removing CO2 from air, comprising the steps:
directing an air flow (13) through an air permeable, electrically conductive mesh (11) coated with an adsorption material (12) for adsorbing CO2 from the air; and
removing the adsorbed CO2 from the adsorption material (12) by generating an electric current through the mesh (11) which heats the coated mesh (11) due to the electric resistance of the mesh (11).

10. Method according to claim 9, **characterized in that**
10.1. the mesh (11) is heated by resistance heating in a negative pressure environment, and/or
10.2. the arrangement (10) according to one of claims 1 to 6 is used.
